# FASCICULE DE BREVET EUROPEEN

(11) **EP 2 947 661 B1**
(45) Date de publication et mention de la délivrance du brevet: **14.03.2018**
(21) Numéro de dépôt: 15167894.3
(22) Date de dépôt: 15.05.2015
(51) Int. Cl.: G21F 7/04, F16B 2/06

(54) **BARRETTE DE MONTAGE D'UN PANNEAU PAR SERRAGE SUR UN CADRE PORTEUR**
MONTAGELEISTE EINES PANEELS DURCH SPANNEN AUF EINEN TRAGENDEN RAHMEN
MOUNTING BAR FOR A PANEL BY CLAMPING TO A SUPPORT FRAME

(30) Priorité: 19.05.2014 FR 1454458
(43) Date de publication de la demande: 25.11.2015
(73) Titulaire: Commissariat à l'Énergie Atomique et aux Énergies Alternatives, 75015 Paris (FR)
(72) Inventeur: Parrenin, Cédric, 21120 TIL-CHATEL (FR)
(74) Mandataire: Brevalex

(56) Documents cités:
- WO-A1-84/01984
- DE-U1- 8 913 285
- FR-A1- 2 273 631
- US-A- 2 296 782

## Description

### DOMAINE TECHNIQUE

L'invention concerne l'assemblage d'une enceinte fermée, telle qu'une boîte à gants pour la manipulation de matière radioactive, cette enceinte comprenant une structure portant un panneau plan qui est appliqué sur un cadre de cette structure et serré sur ce cadre par des moyens de serrage.

### ETAT DE LA TECHNIQUE ANTERIEURE

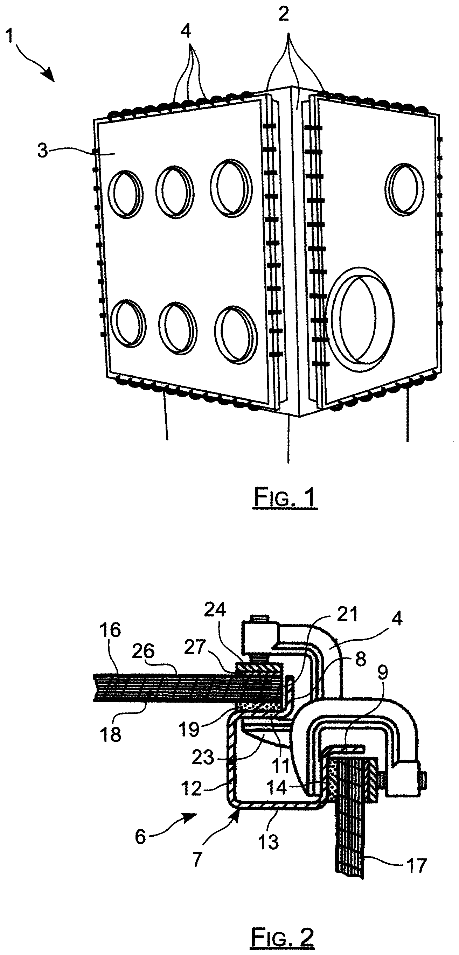

Comme visible sur la figure 1, une enceinte 1 de type boîte à gants pour la manipulation de matière radioactive, est formée d'une structure porteuse rigide 2 constituée de profilés agencés selon les arêtes d'un parallélépipède, sur laquelle sont rapportés des panneaux 3, pouvant être transparents. Les panneaux sont fixés à la structure porteuse par des serre-joints repérés par 4.

La fixation des panneaux, qui est représentée de manière plus détaillée dans la vue en coupe de la figure 2 est assurée grâce à la coopération des serre-joints 4 avec la section particulière, dite en Omega, des profilés 6 constitutifs de la structure porteuse.

Chaque profilé 6 présente une section transversale correspondant à la forme de la lettre Omega : cette section comprend une portion principale 7 concave ouverte orientée vers l'extérieur de l'enceinte, et qui est terminée par deux ailes 8 et 9 qui s'éloignent l'une de l'autre.

La portion principale concave 7 s'étend sur environ trois quarts de tour autour de l'axe du profilé 6. Elle a une forme globale de carré comprenant quatre côtés consécutifs 11, 12, 13 et 14 mais dépourvu de l'un de ses sommets au niveau de son ouverture en direction opposée à l'enceinte. Les côtés 12 et 13 correspondent au fond du profilé, alors que les côtés 11 et 14 correspondent à ceux qui sont le plus à l'extérieur par rapport à l'enceinte, et contre lesquels s'appliquent des panneaux de fermeture de l'enceinte, repérés par 16 et 17.

L'aile 8 prolonge le côté 11 en s'étendant perpendiculairement à ce côté 11 et en direction opposée à la région centrale de l'enceinte. De manière analogue, l'aile 9 prolonge le côté 14 en s'étendant perpendiculairement à ce côté en direction opposée à la région centrale de l'enceinte. Les deux ailes 8 et 9 s'étendent ainsi à angle droit l'une par rapport à l'autre, et délimitent conjointement une ouverture du profilé s'évasant vers l'extérieur.

Comme visible dans la figure 2, le panneau 16 a sa face interne 18 appliquée, le long de son bord, sur le côté 11 du profilé 6, par l'intermédiaire d'un joint d'étanchéité 19 interposé entre ce panneau 16 et le côté 11.

La tranche 21 de ce panneau 16 est en vis-à-vis de l'aile 8 du profilé 6, et le panneau 16 est maintenu pressé contre le côté 11 par un serre-joint 4. Le serre-joint 4 présente une touche fixe 23 qui est engagée dans la concavité du profilé pour être en appui sur la face interne du côté 11, et une touche mobile 24 qui est en appui sur la face externe 26 du panneau 16, par l'intermédiaire d'une garniture de serrage 27 appelée contre-cadre. Ce contre cadre répartit uniformément l'effort de serrage ponctuel des différents serre joints, pour limiter les contraintes dans le panneau qui peut être fragile lorsque fabriqué en polyméthacrylate.

Les serre-joints 4 sont ainsi répartis sur tout le pourtour du panneau 16 pour le presser de manière étanche contre la structure porteuse, encore appelée carcasse, que forment conjointement les profilés assemblés les uns aux autres.

En pratique, le nombre de serre-joints est important pour assurer une étanchéité correcte, de sorte que le montage d'une telle boîte à gants est nécessairement long et fastidieux. Le serrage des premiers serre-joints en maintenant un contre-cadre tend à faire bouger le contre-cadre voire à le faire tomber. Par ailleurs, l'écartement entre les serre-joints est déterminé par l'opérateur de sorte qu'il peut être trop aléatoire et fluctuer d'un opérateur à un autre. Le resserrage d'un serre-joint tend à desserrer les serre-joints adjacents, voire à les faire bouger. En outre, les filets de la vis de serrage de chaque serre-joint constituent des portions qui peuvent être difficiles à décontaminer en cas de contamination externe à la boîte. Enfin, les séries de serre-joints qui équipent une boîte à gants dépassent, de sorte qu'ils accrochent les vêtements et/ou la combinaison des opérateurs.

Le but de l'invention est de proposer une solution pour remédier à ces inconvénients.

Une barrette de montage selon le préambule de la revendication 1 est connue du document DE 89 13 285 U.

### RESUME DE L'INVENTION

A cet effet, l'invention a pour objet une barrette de montage d'un panneau par serrage du pourtour de ce panneau sur un profilé d'une structure porteuse pour constituer une enceinte fermée, cette barrette comprenant un corps incluant une base prolongée par deux flancs délimitant conjointement une rigole rectiligne destinée à chevaucher un bord de panneau et un bord de profilé pour les enserrer, l'un des flancs comprenant plusieurs trous taraudés, chaque trou taraudé étant équipé d'une vis de serrage.

Cette barrette a ainsi une forme allongée facilitant sa préhension, et elle porte plusieurs vis de serrage régulièrement espacées, ce qui simplifie significativement le montage d'un panneau. Cette barrette comprend en outre un tampon d'appui de même longueur que le corps et longeant le flanc qui porte chaque vis de serrage, au moins une vis de serrage étant solidarisée au tampon d'appui tout en étant libre de tourner par rapport à ce tampon d'appui.

L'invention concerne également une barrette ainsi définie, comprenant deux vis de serrage solidarisées au tampon d'appui tout en étant chacune libre de tourner par rapport à ce tampon, ces deux vis étant les deux vis les plus proches des extrémités du corps.

L'invention concerne également une barrette ainsi définie, comprenant une languette protectrice prolongeant le flanc portant les vis de serrage pour couvrir l'espace séparant ce flanc du panneau lorsque la barrette est en place.

L'invention concerne également une barrette ainsi définie, dans laquelle la languette est un élément rapporté fixé par emboîtement et/ou collage en face externe du flanc portant les vis de serrage.

L'invention concerne également une barrette ainsi définie, dans laquelle l'élément rapporté portant la languette est emboîté dans les trous taraudés du flanc qui le porte.

### BREVE DESCRIPTION DES DESSINS

La figure 1 est une vue en perspective d'une boîte à gants de l'Etat de la technique ;
La figure 2 est une vue en coupe d'un profilé de structure de boîte à gants auquel sont fixés deux panneaux par des serre-joints conformément à l'Etat de la technique ;
La figure 3 est une vue en perspective d'un corps de barrette de serrage selon l'invention ;
La figure 4 est une vue en coupe transversale d'une barrette de serrage selon l'invention qui enserre un profilé et un panneau ;
La figure 5 est une vue en coupe transversale d'une barrette de serrage selon l'invention qui enserre un profilé et un panneau ;
La figure 6 est une vue partielle d'un panneau monté sur une structure au moyen de barrettes de serrage selon l'invention.

### EXPOSE DETAILLE DE MODES DE REALISATION PARTICULIERS

L'idée à la base de l'invention est de remplacer les séries de serre-joints ponctuels de l'Etat de la technique, par des barrettes linéaires comprenant chacune un corps linéaire portant plusieurs vis de serrage et un élément de contre-cadre monté de manière imperdable.

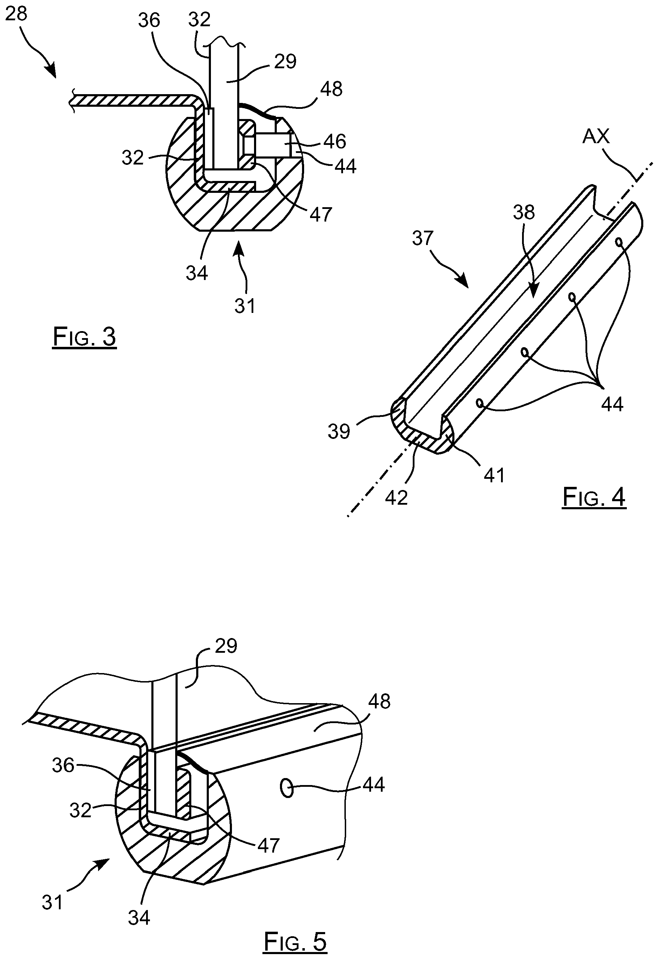

Dans la figure 3, on a représenté un profilé 28 de structure d'enceinte portant un panneau latéral 29 qui est monté sur cette structure grâce à une barrette selon l'invention repérée par 31.

Le profilé 28 comporte un côté 32 d'appui d'une face interne 33 du panneau 29, et qui est prolongé par une aile 34 s'étendant perpendiculairement à ce côté. Le panneau 29 est appliqué contre le côté d'appui 32 par l'intermédiaire d'un joint d'étanchéité 36, en étant positionné de sorte que la tranche de ce panneau 29 est en vis-à-vis et à faible distance de l'aile 34.

La barrette 31 comporte un corps principal 37, visible dans la figure 4, se rapprochant d'un profilé ayant en section transversale la forme de la lettre C, et qui est destiné à venir chevaucher le bord d'un panneau 29 et le côté correspondant d'un profilé pour les enserrer.

Ce corps principal 37, qui est par exemple fabriqué en aluminium, délimite ainsi une rigole interne 38 s'étendant selon la direction principale de ce corps, notée AX. Il comprend deux bords 39 et 41 correspondant chacun à une branche de la section en C de ce corps et qui sont réunis par une base centrale 42.

Le bord 41 de ce corps principal comporte ici quatre trous taraudés traversants 44 parallèles les uns aux autres et perpendiculaires à la direction AX, et débouchant chacun dans la rigole 38 au niveau de la face interne du bord 41. Chaque trou taraudé est destiné à recevoir une vis de serrage telle que la vis 46 des figures 3 et 5, qui est une vis dite sans tête, dont l'extrémité de vissage comporte une empreinte. Cette empreinte est par exemple une empreinte à six pans creux permettant l'engagement d'une clé ou d'un outil approprié pour procéder au serrage.

Comme visible dans la figure 3, le bord 41 portant les vis de serrage présente une épaisseur suffisante pour que ces vis, qui sont en outre prévues relativement courtes, ne dépassent pas de la face externe du bord 41 lorsqu'elles sont en place.

L'extrémité de serrage de chaque vis 46 dépasse ainsi dans la rigole 38 de la face interne du bord 41 pour être en vis-à-vis du bord opposé, à savoir le bord 39. Comme visible dans les figures 3 et 5, la barrette selon l'invention comporte encore un élément de contre-cadre, repéré par 47, et qui est solidarisé au reste de la barrette pour être imperdable de manière à simplifier les opérations de montage de la boîte.

Plus particulièrement, deux des quatre vis 46 ont des extrémités de serrage en forme d'embout ou de téton, et ces extrémités sont engagées et serties chacune dans un trou correspondant de l'élément de contre-cadre. Ces deux vis 46 qui sont ici les vis situées en extrémité du corps 37 sont ainsi solidarisées à l'élément de contre-cadre pour le rendre imperdable, tout en étant libres de tourner par rapport à cet élément. Les deux autres vis 46, à savoir ici les deux vis centrales, peuvent quant à elles être montées normalement.

Comme il ressort des figures, l'élément de contre-cadre 47 constitue un tampon d'appui formé par une bande ou plaque à contour rectangulaire dont la longueur correspond à la longueur du corps de barrette, et dont la largeur correspond à la profondeur de la rigole 38.

Grâce à ce montage, l'élément de contre-cadre 47 est imperdable par rapport au reste de la barrette, et il assure la fonction de répartition homogène des efforts de serrage des différentes vis 46 lorsque l'ensemble est en place.

Il importe de noter que le nombre de vis que comporte une barrette peut être adapté lors de la conception à l'application pour laquelle la barrette est destinée, en fonction notamment de l'intensité d'effort presseur moyen que l'on souhaite atteindre.

Complémentairement, une jupe protectrice, sous forme d'une languette flexible formant bavette qui est repérée par 48, prolonge le bord 41 du corps de barrette 37 en s'étendant à peu près parallèlement au fond de la rigole 38. Cette bavette peut être fabriquée en métal ou en matière plastique.

Lorsque l'ensemble est en place, comme visible sur les figures 3 et 5, la languette flexible 48 a son bord libre en appui sur la face externe du panneau, de sorte qu'elle recouvre de manière sensiblement étanche la région de la barrette comprenant les filets des vis 46, et qui est située entre l'élément de contre-cadre et le bord 41 du corps de barrette.

Cette languette peut être fixée au corps de barrette en étant rapportée à la face externe de son bord ou flanc 41 en étant éventuellement fixée aux trous comportant les vis de serrage.

Chaque barrette peut être prééquipée d'une languette protectrice de même longueur que le corps de barrette. Mais on peut aussi prévoir de rapporter une même languette sur un ensemble de barrettes en place pour favoriser une meilleure protection contre la contamination, dépourvue d'interstice.

Chaque languette peut se présenter sous forme d'un capot de protection s'emboitant et se déboîtant sans outil sur le flanc du corps de barrette et dans les trous filetés de ses vis, de manière réversible.

Comme visible dans les figures, la barrette selon l'invention permet d'enserrer un côté 32 de profilé pourvu d'un joint 36 et un panneau 29 pour les fixer l'un à l'autre en les comprimant entre l'élément de cadre 47 pressé par les vis 46 serrées et le bord ou flanc 39 du corps de barrette.

Grâce à l'élément de contre-cadre monté de manière à être imperdable, le montage de la barrette est significativement simplifié puisqu'un opérateur peut maintenir d'une main le corps de barrette en place et de l'autre main serrer les vis de la barrette en question. Par ailleurs, l'absence de relief et d'aspérités de ces barrettes facilite leur manipulation et leur nettoyage.

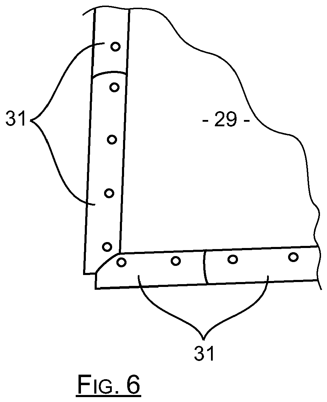

Comme représenté sur la figure 6, les barrettes 31 sont montées les unes à côté des autres le long du bord du cadre pour serrer ce cadre sur tout son pourtour afin d'assurer une étanchéité appropriée.

D'une manière générale, l'invention s'applique aux enceintes fermées constituées d'une structure portant des panneaux serrés sur cette structure, de telles enceintes existant en milieu hospitalier dans les couveuses. De telles enceintes peuvent aussi correspondre à des espaces dédiés à l'isolement d'agents chimiques et bactériologique dans le domaine médical ou pharmaceutique. Il peut également s'agir d'enceintes mobiles à montage rapide sur des théâtres d'opérations civils ou militaires.

## Revendications

1. Barrette (31) de montage d'un panneau (29) par serrage du pourtour de ce panneau sur un profilé (28) d'une structure porteuse pour constituer une enceinte fermée, cette barrette (31) comprenant un corps (37) incluant une base (42) prolongée par deux flancs (39, 41) délimitant conjointement une rigole rectiligne (38) destinée à chevaucher un bord de panneau (29) et un bord de profilé (32) pour les enserrer, l'un des flancs (41) comprenant plusieurs trous taraudés (44), chaque trou taraudé étant équipé d'une vis de serrage (46)**caractérisée en ce qu'**elle comprend en outre un tampon d'appui (47) de même longueur que le corps (37) et longeant le flanc (41) qui porte chaque vis de serrage (46), au moins une vis de serrage (46) étant solidarisée au tampon d'appui (47) tout en étant libre de tourner par rapport à ce tampon d'appui (47).

2. Barrette selon la revendication 1 , comprenant deux vis de serrage (46) solidarisées au tampon d'appui (47) tout en étant chacune libre de tourner par rapport à ce tampon (47), ces deux vis étant les deux vis les plus proches des extrémités du corps (37).

3. Barrette selon l'une des revendications 1 ou 2, comprenant une languette protectrice (48) prolongeant le flanc (41) portant les vis de serrage (46) pour couvrir l'espace séparant ce flanc du panneau (29) lorsque la barrette est en place.

4. Barrette selon la revendication 3, dans laquelle la languette (48) est un élément rapporté fixé par emboîtement et/ou collage en face externe du flanc (41) portant les vis de serrage (46).

5. Barrette selon la revendication 4, dans laquelle l'élément rapporté portant la languette est emboîté dans les trous taraudés (44) du flanc (41) qui le porte.

## Patentansprüche

1. Leiste (31) zur Montage einer Platte (29) durch Spannen des Umfangs dieser Platte auf ein Profil (28) einer Trägerstruktur zum Bilden eines geschlossenen Gehäuses, wobei diese Leiste (31) einen Körper (37) umfasst, der eine Basis (42) enthält, die durch zwei Flanken (39, 41) verlängert ist, die gemeinsam eine gerade Rinne (38) begrenzen, welche dazu ausgelegt ist, einen Rand der Platte (29) und einen Rand des Profils (32) zu überlappen, um sie einzuspannen, wobei eine der Flanken (41) mehrere Gewindelöcher (44) umfasst, wobei jedes Gewindeloch mit einer Spannschraube (46) ausgestattet ist, **dadurch gekennzeichnet, dass** sie ferner ein Andrückpolster (47) mit der gleichen Länge wie der Körper (37) umfasst, das entlang der Flanke (41) verläuft, die jede Spannschraube (46) trägt, wobei wenigstens eine Spannschraube (46) mit dem Andrückpolster (47) verbunden und gleichzeitig bezüglich dieses Andrückpolsters (47) frei drehbar ist.

2. Leiste nach Anspruch 1, umfassend zwei Spannschrauben (46), die mit dem Andrückpolster (47) verbunden und gleichzeitig jeweils bezüglich dieses Polsters (47) frei drehbar sind, wobei diese zwei Schrauben diejenigen zwei Schrauben sind, die den Enden des Körpers (37) am nächsten sind.

3. Leiste nach einem der Ansprüche 1 oder 2, umfassend eine Schutzzunge (48), die die Flanke (41) verlängert, welche die Spannschrauben (46) trägt, um den Raum zu bedecken, der diese Flanke von der Platte (29) separiert, wenn die Leiste platziert ist.

4. Leiste nach Anspruch 3, wobei die Zunge (48) ein angesetztes Element ist, das durch Einstecken und/oder Kleben an der Außenfläche der Flanke (41) befestigt ist, die die Spannschrauben (46) trägt.

5. Leiste nach Anspruch 4, wobei das angesetzte Element, das die Zunge trägt, in den Gewindelöchern (44) der Flanke (41) eingesteckt ist, die sie trägt.

## Claims

1. Panel (29) assembly strip (31) by clamping the periphery of this panel on a section (28) of a support structure to form a closed chamber, this strip (31) comprising a body (37) including a base (42) prolonged by two sides (39, 41) that together delimit a straight groove (38) that will overlap one edge of the panel (29) and one edge of the section (32) to clamp them together, one of the edges (41) comprising several threaded holes (44), each threaded hole being provided with a clamping screw (46), also comprising a bearing buffer (47) of the same length as the body (37) and running along the side (41) that supports each clamping screw (46), at least one clamping screw (46) being fixed to the pressure buffer (47) while being free to rotate relative to this bearing buffer (47).

2. Strip according to claim 1, comprising two clamping screws (46) fixed to the bearing buffer (47) while being free to rotate relative to this bearing buffer (47), these two screws being the two screws closest to the ends of the body (37).

3. Strip according to one of claims 1 to 2, comprising a protective tab (48) extending the side (41) supporting the clamping screws (46) to cover the space separating this side (29) from the panel when the strip is in place.

4. Strip according to claim 3, in which the tab (48) is an add-on element fixed by insertion and/or gluing on the outside face of the side (41) on which the clamping screws are fitted (46).

5. Strip according to claim 4, in which the add-on element comprising the tab is inserted into the threaded holes (44) of the side (41) that supports it.
